# EUROPEAN PATENT APPLICATION

(11) **EP 3 046 356 A1**
(43) Date of publication of application: **20.07.2016**
(21) Application number: 14843807.0
(22) Date of filing: 28.05.2014
(51) Int. Cl.: H04W 16/28, H04W 4/06

(54) **RADIO COMMUNICATION APPARATUS, CONNECTION CONTROL METHOD, AND NONTEMPORARY RECORDING MEDIUM THAT RECORDS CONNECTION CONTROL PROGRAM**

(30) Priority: 11.09.2013 JP 2013188844
(71) Applicant: Kabushiki Kaisha Toshiba, Minato-ku Tokyo 105-8001 (JP)
(72) Inventor: NAMBA, Yoshiki, Tokyo 105-8001 (JP); WATANABE, Hiroyuki, Tokyo 105-8001 (JP); IIDA, Yasutaka, Tokyo 105-8001 (JP); OGAWA, Jumpei, Tokyo 105-8001 (JP)
(74) Representative: Hoffmann Eitle
(86) International application number: PCT/JP2014/064094
(87) International publication number: WO 2015/037282

(57) **Abstract**

A wireless communication apparatus includes an antenna unit (11), a wireless communication unit (12), an arithmetic unit (13), and an antenna control unit (14). The antenna unit (11) receives wireless signals from wireless communication terminals existing in a communication area, and can change a direction of directivity. The wireless communication unit (12) acquires pieces of position information contained in the wireless signals. The arithmetic unit (13) calculates moving directions and moving speeds of the wireless communication terminals, and calculates remaining times based on the pieces of position information, the moving directions, and the moving speeds. The antenna control unit (14) changes the direction of directivity of the antenna unit from a set first direction of directivity to a second direction of directivity based on the remaining time.

## Description

### Technical Field

Embodiments described herein relate generally to a wireless communication apparatus for distributing information to communication terminals by wireless communication, a connection control method used by the apparatus, and a non-transitory recording medium recording a connection control program.

### Background Art

In public areas such as stations and airports, and commercial facilities such as restaurants, a public wireless LAN (Local Area Network) open to the public has become widespread. Along with popularization of a public wireless LAN open to the public, a service for improving the user convenience by distributing various kinds of information such as an advertisement and/or the operation information of a train, airplane, or the like using a wireless LAN system is spreading. In this type of service, it is effective to distribute information to a place optimum for the user of the information to utilize it. To do this, it is necessary to distribute the information to a limited narrow area such as an area in front of a store. To attract the user of information, it is necessary to provide a large amount of information such as a high-quality video and image instead of information such as text and a still image obtained by thinning out an information amount.

In the above-described background, when a plurality of communication terminals exist in an area in which information is distributed by a wireless LAN (IEEE802.11) generally used, the information distribution time taken to distribute the information to the communication terminals becomes long. Consequently, distribution of the information may not be completed while the user of the information passes through this area.

### Citation List

### Patent Literatures

Patent Literature 1: Jpn. Pat. Appln. KOKAI Publication No. 2008-271063
Patent Literature 2: Jpn. Pat. Appln. KOKAI Publication No. 2006-311077

### Summary of Invention

### Technical Problem

As described above, the conventional wireless communication apparatus imposes a problem that the information distribution time becomes long when a plurality of communication terminals exist in an area in which information is distributed.

The present invention has as its object to provide a wireless communication apparatus capable of suppressing the information distribution time from becoming long even when a plurality of communication terminals exist in a preset area, a connection control method used by the apparatus, and a non-transitory recording medium recording a connection control program.

### Solution to Problem

According to an embodiment, a wireless communication apparatus includes an antenna unit, a wireless communication unit, an arithmetic unit, and an antenna control unit. The antenna unit can receive wireless signals from a plurality of wireless communication terminals existing in a communication area, and change a direction of directivity. The wireless communication unit acquires pieces of position information contained in the wireless signals. The arithmetic unit calculates moving directions and moving speeds of the wireless communication terminals based on the pieces of position information, respectively, and calculates remaining times taken to pass through the communication area based on the pieces of position information, the moving directions, and the moving speeds. The antenna control unit changes the direction of directivity of the antenna unit from a set first direction of directivity to a second direction of directivity in which the wireless communication terminal whose remaining time is shorter than those of the remaining wireless communication terminals exists.

### Brief Description of Drawings

[FIG. 1] FIG. 1 is a view showing the configuration of a wireless LAN system including an AP according to the first embodiment.
[FIG. 2] FIG. 2 is a block diagram showing the functional arrangement of the AP shown in FIG. 1.
[FIG. 3] FIG. 3 is a block diagram showing the functional arrangement of a wireless communication terminal shown in FIG. 1.
[FIG. 4] FIG. 4 is a flowchart when the AP shown in FIG. 2 sets directivity to the wireless communication terminal.
[FIG. 5] FIG. 5 is a view showing the second communication area formed according to the flowchart shown in FIG. 4.
[FIG. 6] FIG. 6 is a flowchart when an AP sets directivity to a wireless communication terminal according to the second embodiment.
[FIG. 7] FIG. 7 is a flowchart when an AP sets directivity to a wireless communication terminal according to the third embodiment.
[FIG. 8] FIG. 8 is a view showing the configuration of a wireless LAN system including the AP according to the third embodiment.
[FIG. 9] FIG. 9 is a flowchart when an AP sets directivity to a wireless communication terminal according to the fourth embodiment.
[FIG. 10] FIG. 10 is a view showing the configuration of a wireless LAN system including the AP according to the fourth embodiment.
[FIG. 11] FIG. 11 is a flowchart when an AP sets directivity to a wireless communication terminal according to the fifth embodiment.
[FIG. 12] FIG. 12 is a view showing the configuration of a wireless LAN system including the AP according to the fifth embodiment.
[FIG. 13] FIG. 13 is a view showing the configuration of a wireless LAN system including an AP according to the sixth embodiment.
[FIG. 14] FIG. 14 is a block diagram showing the functional arrangement of the AP shown in FIG. 13.
[FIG. 15] FIG. 15 is a flowchart when the AP shown in FIG. 14 sets directivity to a wireless communication terminal.
[FIG. 16] FIG. 16 is a view showing the configuration of a wireless LAN system including an AP according to the seventh embodiment.
[FIG. 17] FIG. 17 is a block diagram showing the functional arrangement of an AP according to the eighth embodiment.

### Description of Embodiments

Embodiments will be described below with reference to the accompanying drawings.

### (First Embodiment)

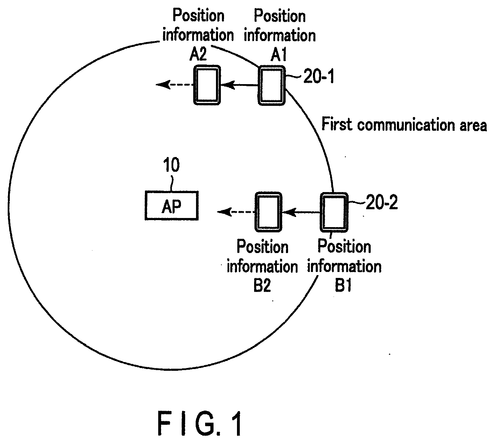

FIG. 1 is a schematic view showing the configuration of a wireless LAN system including an access point (AP) 10 as a wireless communication apparatus according to the first embodiment. The wireless LAN system shown in FIG. 1 includes, for example, the AP 10 complying with the IEEE802.11 standard and wireless communication terminals 20-1 and 20-2 complying with the IEEE802.11 standard. The AP 10 and the wireless communication terminals 20-1 and 20-2 perform wireless communication complying with the IEEE802.11 standard.

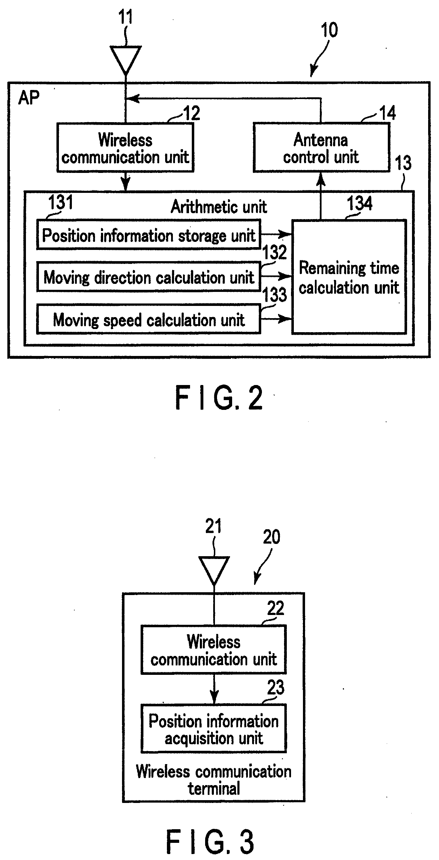

FIG. 2 is a block diagram showing the functional arrangement of the AP 10 shown in FIG. 1. The AP 10 shown in FIG. 2 includes an antenna unit 11, a wireless communication unit 12, an arithmetic unit 13, and an antenna control unit 14. Note that the wireless communication terminals 20-1 and 20-2 are shown in FIG. 1 but will be explained as wireless communication terminals 20 in a description of FIG. 2.

The antenna unit 11 has a function capable of adjusting directivity. The antenna unit 11 changes the direction of directivity in accordance with a direction-of-directivity control signal output from the antenna control unit 14.

In response to a receiving of a direction-of-directivity control signal for designating the first direction of directivity, the antenna unit 11 transmits a wireless signal in the first direction of directivity, that is, equally omnidirectionally transmits a wireless signal. This forms, for example, the first communication area in a concentric shape, as shown in FIG. 1. The antenna unit 11 receives a wireless signal coming from the first direction of directivity, that is, a wireless signal transmitted from each wireless communication terminal 20 existing in the first communication area. Each wireless signal contains position information of the wireless communication terminal 20 every preset period.

The antenna unit 11 transmits the wireless signal in the second direction of directivity in response to a direction-of-directivity control signal for designating the second direction of directivity. When the wireless signal is transmitted in the second direction of directivity, the second communication area is formed. The antenna unit 11 receives a wireless signal coming from the second direction of directivity.

The wireless communication unit 12 wirelessly communicates with each wireless communication terminal 20 existing in the first communication area or the second communication area. The wireless communication unit 12 generates a reception signal by performing power adjustment, frequency conversion, and the like for the wireless signal received by the antenna unit 11. The wireless communication unit 12 outputs position information contained in the reception signal to the arithmetic unit 13.

The arithmetic unit 13 includes a position information storage unit 131, a moving direction calculation unit 132, a moving speed calculation unit 133, and a remaining time calculation unit 134.

The position information storage unit 131 stores, in advance, position information of the self apparatus.

The moving direction calculation unit 132 receives the position information of each wireless communication terminal 20 from the wireless communication unit 12. The moving direction calculation unit 132 calculates the moving direction of each wireless communication terminal 20 based on a temporal change of the received position information. The moving direction calculation unit 132 outputs the calculated moving direction to the remaining time calculation unit 134.

The moving speed calculation unit 133 receives the position information of each wireless communication terminal 20 from the wireless communication unit 12. The moving speed calculation unit 133 calculates the moving speed of each wireless communication terminal 20 based on the temporal change of the received position information. The moving speed calculation unit 133 outputs the calculated moving speed to the remaining time calculation unit 134.

The remaining time calculation unit 134 grasps the range of the first communication area. Based on the position information of the self apparatus stored in the position information storage unit 131, the position information of each wireless communication terminal 20, the range of the first communication area, the moving direction, and the moving speed, the remaining time calculation unit 134 calculates, as a remaining time, the time taken for each wireless communication terminal 20 existing in the first communication area to pass through the first communication area. The remaining time calculation unit 134 outputs the calculated remaining time to the antenna control unit 14.

The antenna control unit 14 compares the remaining times supplied from the remaining time calculation unit 134 between the wireless communication terminals 20 existing in the first communication area. The antenna control unit 14 sets, as the second direction of directivity, a direction in which the wireless communication terminal 20 whose remaining time is shortest exists. The antenna control unit 14 outputs a direction-of-directivity control signal to the antenna unit 11 so as to converge a beam in the second direction of directivity.

FIG. 3 is a block diagram showing the functional arrangement of the wireless communication terminal 20 shown in FIG. 1. The wireless communication terminal 20 shown in FIG. 3 includes an antenna unit 21, a wireless communication unit 22, and a position information acquisition unit 23. Note that the wireless communication terminals 20-1 and 20-2 are shown in FIG. 1 but will be explained as the wireless communication terminals 20 in a description of FIG. 3.

The antenna unit 21 receives a wireless signal transmitted from the AP 10. The antenna unit 21 transmits, as a wireless signal, to the AP 10, a transmission signal supplied from the wireless communication unit 22.

The wireless communication unit 22 wirelessly communicates with the AP 10. The wireless communication unit 22 modulates the position information of the self terminal acquired by the position information acquisition unit 23. The wireless communication unit 22 performs processing such as frequency conversion and power adjustment for the modulated signal. The wireless communication unit 22 outputs the processed signal to the antenna unit 21.

The position information acquisition unit 23 acquires the position of the self apparatus by, for example, a GPS (Global Positioning System) or the like for every preset period. The position information acquisition unit 23 outputs the acquired position information to the wireless communication unit 22.

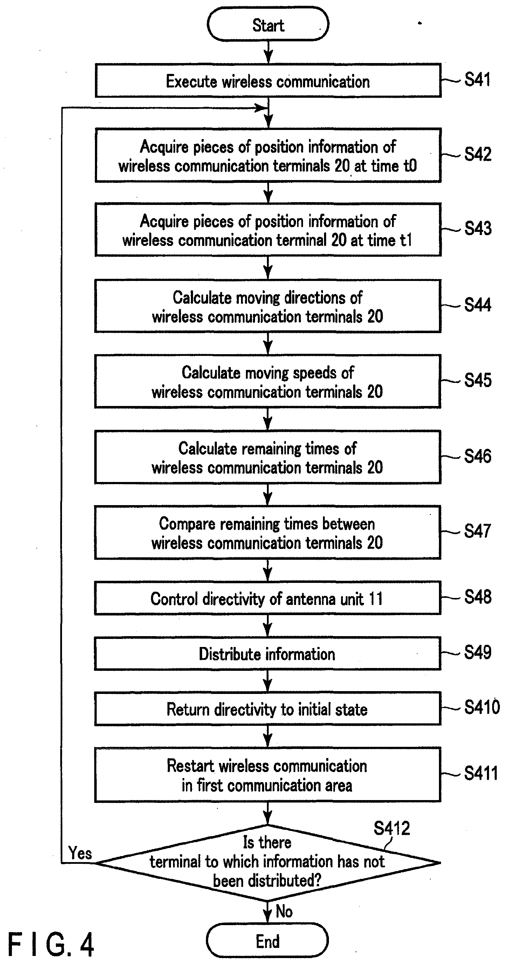

A connection control operation by the AP 10 having the above arrangement will be described in accordance with the processing procedure of the AP 10. FIG. 4 is a flowchart when the AP 10 shown in FIG. 2 sets directivity to the wireless communication terminal 20-1 or 20-2.

In an initial state, the AP 10 forms the first communication area shown in FIG. 1.

When each of the wireless communication terminals 20-1 and 20-2 enters the first communication area, the wireless communication unit 12 of the AP 10 wirelessly communicates with each of the wireless communication terminals 20-1 and 20-2 (step S41). The wireless communication unit 12 acquires position information A1 of the wireless communication terminal 20-1 at time t0 from a wireless signal transmitted from the wireless communication terminal 20-1. Furthermore, the wireless communication unit 12 acquires position information B1 of the wireless communication terminal 20-2 at time t0 from a wireless signal transmitted from the wireless communication terminal 20-2 (step S42).

The wireless communication unit 12 receives a wireless signal from each of the wireless communication terminals 20-1 and 20-2 again after a predetermined time elapses. The wireless communication unit 12 acquires position information A2 of the wireless communication terminal 20-1 at time t1. Furthermore, the wireless communication unit 12 acquires position information B2 of the wireless communication terminal 20-2 at time t1 (step S43).

The moving direction calculation unit 132 of the AP 10 calculates the moving direction of the wireless communication terminal 20-1 by assuming that the wireless communication terminal 20-1 moves in a direction in which a line connecting the position information A1 and the position information A2 extends. Similarly, the moving direction calculation unit 132 calculates the moving direction of the wireless communication terminal 20-2 by assuming that the wireless communication terminal 20-2 moves in a direction in which a line connecting the position information B1 and the position information B2 extends (step S44).

The moving speed calculation unit 133 of the AP 10 obtains the moving distance of the wireless communication terminal 20-1 from the position information A1 and the position information A2. The moving speed calculation unit 133 calculates the moving speed of the wireless communication terminal 20-1 by dividing the obtained moving distance by the difference between times t1 and t0. Similarly, the moving speed calculation unit 133 obtains the moving distance of the wireless communication terminal 20-2 from the position information B1 and the position information B2. The moving speed calculation unit 133 calculates the moving speed of the wireless communication terminal 20-2 by dividing the obtained moving distance by the difference between times t1 and t0 (step S45).

Based on the position information of the self apparatus, the pieces A2 and B2 of position information of the wireless communication terminals 20-1 and 20-2, the range of the first communication area, the moving directions of the wireless communication terminals 20-1 and 20-2, and the moving speeds of the wireless communication terminals 20-1 and 20-2, the remaining time calculation unit 134 of the AP 10 calculates, as remaining times L1 and L2, the times taken for the wireless communication terminals 20-1 and 20-2 to pass through the first communication area (step S46).

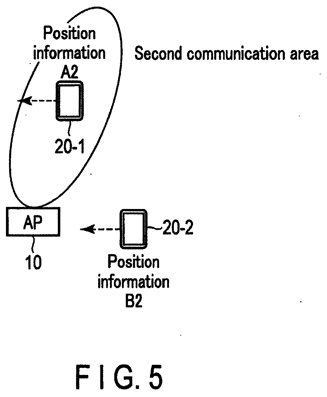

The antenna control unit 14 of the AP 10 compares the remaining times L1 and L2 with each other, and determines which of the remaining times is shorter (step S47). Referring to FIG. 1, if the antenna control unit 14 determines that the remaining time L1 is shorter than the remaining time L2, it sets, as the second direction of directivity, a direction in which the wireless communication terminal 20-1 exists. The antenna control unit 14 outputs a direction-of-directivity control signal to the antenna unit 11 so as to transmit the wireless signal in the second direction of directivity (step S48). By setting the second direction of directivity in this way, the second communication area shown in FIG. 5 is formed.

The wireless communication unit 12 distributes information to the wireless communication terminal 20-1 by wirelessly communicating with the wireless communication terminal 20-1 existing in the second communication area (step S49).

Upon end of the information distribution to the wireless communication terminal 20-1, the wireless communication unit 12 notifies the antenna control unit 14 that the information distribution has ended. Upon receiving the notification from the wireless communication unit 12, the antenna control unit 14 outputs a direction-of-directivity control signal to the antenna unit 11 so that the antenna unit 11 transmits the wireless signal in the first direction of directivity (step S410). The wireless communication unit 12 restarts wireless communication with the wireless communication terminal 20-2 (step S411).

The wireless communication unit 12 determines whether the wireless communication terminal 20 to which the information has not been distributed exists or not in the first communication area (step S412). In this description, since the information has not been distributed to the wireless communication terminal 20-2 (YES in step S412), the AP 10 causes the process to transit to step S42. The AP 10 re-executes the processes in steps S42 to S48 for the wireless communication terminal 20-2, and outputs a direction-of-directivity control signal to the antenna unit 11 so as to transmit the wireless signal in a direction in which the wireless communication terminal 20-2 exists. The wireless communication unit 12 distributes the information to the wireless communication terminal 20-2 by wirelessly communicating with the wireless communication terminal 20-2 existing in the newly formed second communication area (step S49).

Upon end of the information distribution to the wireless communication terminal 20-2, the wireless communication unit 12 notifies the antenna control unit 14 that the information distribution has ended, and causes the antenna control unit 14 to control the directivity so that the antenna unit 11 transmits the wireless signal in the first direction of directivity (step S410). The wireless communication unit 12 restarts wireless communication with the wireless communication terminal 20 existing in the first communication area (step S411).

If the wireless communication unit 12 determines in step S412 that no wireless communication terminal 20 to which the information has not been distributed exists (NO in step S412), it terminates the process.

As described above, in the first embodiment, the arithmetic unit 13 calculates the remaining time taken for each wireless communication terminal 20 to pass through the first communication area by referring to the position information from each wireless communication terminal 20. The antenna control unit 14 compares the remaining times between the wireless communication terminals 20 existing in the first communication area, and outputs a direction-of-directivity control signal to the antenna unit 11 so as to set the directivity to the wireless communication terminal 20 whose remaining time is shorter. This allows the AP 10 to concentratedly distribute the information to the wireless communication terminal 20 whose remaining time is shorter.

Therefore, according to the first embodiment, even if the plurality of wireless communication terminals 20 exist in the first communication area, it is possible to suppress the data transfer time from becoming long.

### (Second Embodiment)

In the first embodiment, a case in which the antenna control unit 14 sets the directivity of the antenna unit 11 to the wireless communication terminal 20 whose remaining time is shorter has been explained. In addition to this function, if the wireless communication terminals 20 whose remaining times are equal to each other exist, the antenna control unit 14 may compare the moving speeds of the wireless communication terminals 20, and set the directivity of the antenna unit 11 to the wireless communication terminal 20 whose moving speed is higher.

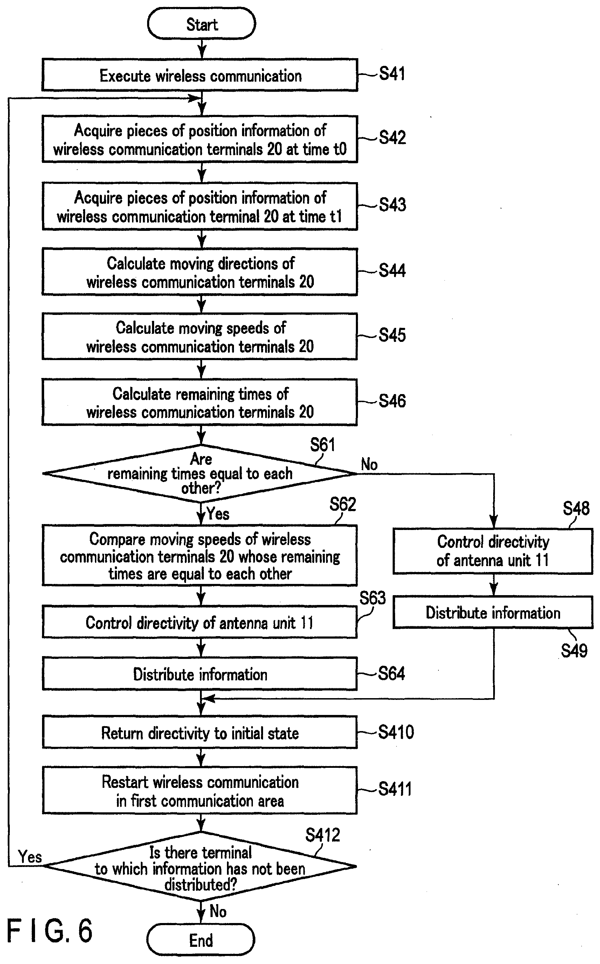

FIG. 6 is a flowchart when an AP 10 sets directivity to a wireless communication terminal 20-1 or 20-2 according to the second embodiment.

In an initial state, the AP 10 forms the first communication area shown in FIG. 1.

After steps S41 to S46 of FIG. 6, an antenna control unit 14 of the AP 10 compares remaining times L1 and L2 with each other, and determines whether the remaining times L1 and L2 are equal to each other (step S61). If it is determined that the remaining times L1 and L2 are equal to each other (YES in step S61), the antenna control unit 14 compares the moving speeds of the wireless communication terminals 20-1 and 20-2 with each other (step S62). The antenna control unit 14 sets, as the second direction of directivity, a direction in which the wireless communication terminal 20 whose moving speed is higher exists, and outputs a direction-of-directivity control signal to an antenna unit 11 so as to transmit a wireless signal in the second direction of directivity (step S63). A wireless communication unit 12 distributes information to the wireless communication terminal 20 existing in the second communication area formed by setting the second direction of directivity (step S64).

If it is determined that the remaining times L1 and L2 are not equal to each other (NO in step S61), the antenna control unit 14 sets, as the second direction of directivity, a direction in which the wireless communication terminal 20 whose remaining time is shorter exists, and outputs a direction-of-directivity control signal to the antenna unit 11 so as to transmit the wireless signal in the second direction of directivity (step S48). The wireless communication unit 12 distributes the information to the wireless communication terminal 20 existing in the second communication area formed by setting the second direction of directivity (step S49).

Subsequently, the AP 10 performs steps S410 to S412 to distribute the information to the wireless communication terminal 20 existing in the first communication area.

As described above, in the second embodiment, if the remaining times of the wireless communication terminals 20 are equal to each other, the antenna control unit 14 determines the direction of directivity of the antenna unit 11 based on the moving speeds of the wireless communication terminals 20. This allows the AP 10 to concentratedly distribute the information to one wireless communication terminal 20 even if the wireless communication terminals 20 whose remaining times are equal to each other exist.

Therefore, according to the second embodiment, even if the plurality of wireless communication terminals 20 exist in the first communication area, it is possible to suppress the data transfer time from becoming long.

### (Third Embodiment)

In the first embodiment, a case in which the antenna control unit 14 sets the directivity of the antenna unit 11 to the wireless communication terminal 20 whose remaining time is shorter has been explained. In addition to this function, if the wireless communication terminal 20 whose remaining time is shorter than an information distribution time exists, the antenna control unit 14 may exclude the wireless communication terminal 20 from targets to which the directivity of the antenna unit 11 is set. The information distribution time indicates the time taken for the AP 10 to distribute the information.

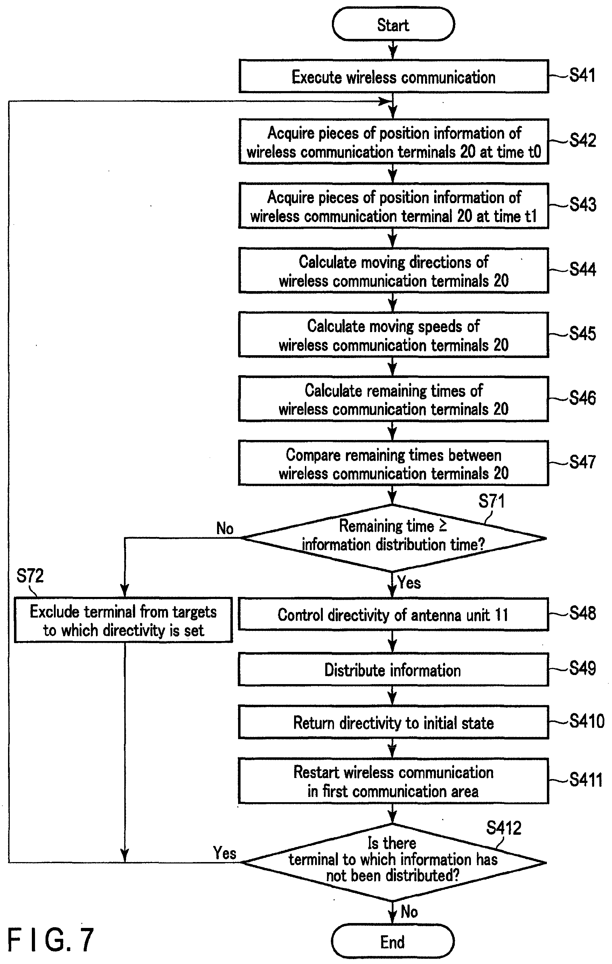

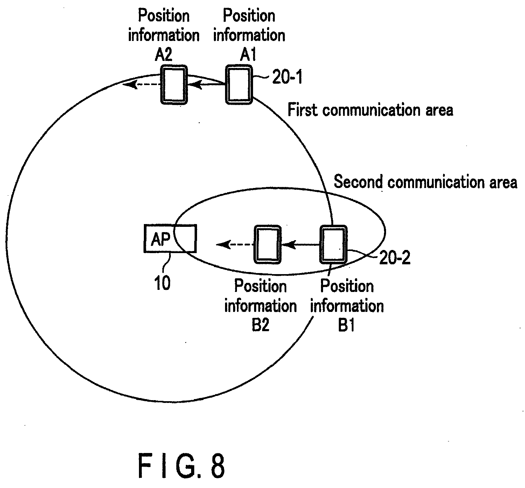

FIG. 7 is a flowchart when an AP 10 sets directivity to a wireless communication terminal 20-2 according to the third embodiment. FIG. 8 is a schematic view for explaining FIG. 7.

In an initial state, the AP 10 forms the first communication area shown in FIG. 8.

After steps S41 to S46 of FIG. 7, an antenna control unit 14 of the AP 10 compares remaining times L1 and L2 with each other, and determines which of the remaining times is shorter (step S47). Referring to FIG. 8, if the antenna control unit 14 determines that the remaining time L1 is shorter than the remaining time L2, it determines whether the remaining time L1 is equal to or longer than the information distribution time (step S71).

If the remaining time L1 is equal to or longer than the information distribution time (YES in step S71), the antenna control unit 14 sets, as the second direction of directivity, a direction in which a wireless communication terminal 20-1 exists, and outputs a direction-of-directivity control signal to an antenna unit 11 so as to transmit a wireless signal in the second direction of directivity (step S48). A wireless communication unit 12 distributes information to the wireless communication terminal 20 existing in the second communication area formed by setting the second direction of directivity (step S49). Subsequently, the AP 10 performs steps S410 to S412 to distribute the information to the wireless communication terminal 20 existing in the first communication area.

If the remaining time L1 is shorter than the information distribution time (NO in step S71), the antenna control unit 14 excludes the wireless communication terminal 20-1 from targets to which the directivity of the antenna unit 11 is set (step S72), and causes the process to transit to step S42.

As described above, in the third embodiment, if the shortest remaining time in the first communication area is shorter than the information distribution time, the antenna control unit 14 excludes the wireless communication terminal 20 having this remaining time from targets to which the directivity of the antenna unit 11 is set. That is, the antenna control unit 14 does not distribute the information to the wireless communication terminal 20 which may pass through the first communication area before completion of information distribution. On the other hand, the antenna control unit 14 sets the directivity to the wireless communication terminal 20 whose remaining time is second shortest. This allows the AP 10 to distribute the information to the wireless communication terminal 20 more efficiently.

Therefore, according to the third embodiment, even if the plurality of wireless communication terminals 20 exist in the first communication area, it is possible to suppress the data transfer time from becoming long.

### (Fourth Embodiment)

In the first embodiment, a case in which the antenna control unit 14 sets the directivity of the antenna unit 11 to the single wireless communication terminal 20 whose remaining time is shorter has been explained. The antenna control unit 14 may set the directivity to the plurality of wireless communication terminals 20.

That is, if the moving directions of a preset number or more of wireless communication terminals 20 are identical, the remaining times of the wireless communication terminals 20 fall within a preset range, and the wireless communication terminals 20 are dense, the antenna control unit 14 sets the directivity of the antenna unit 11 to the wireless communication terminals 20. Note that a case in which the plurality of wireless communication terminals 20 are dense indicates a case in which the preset number or more of wireless communication terminals 20 exist within a preset range.

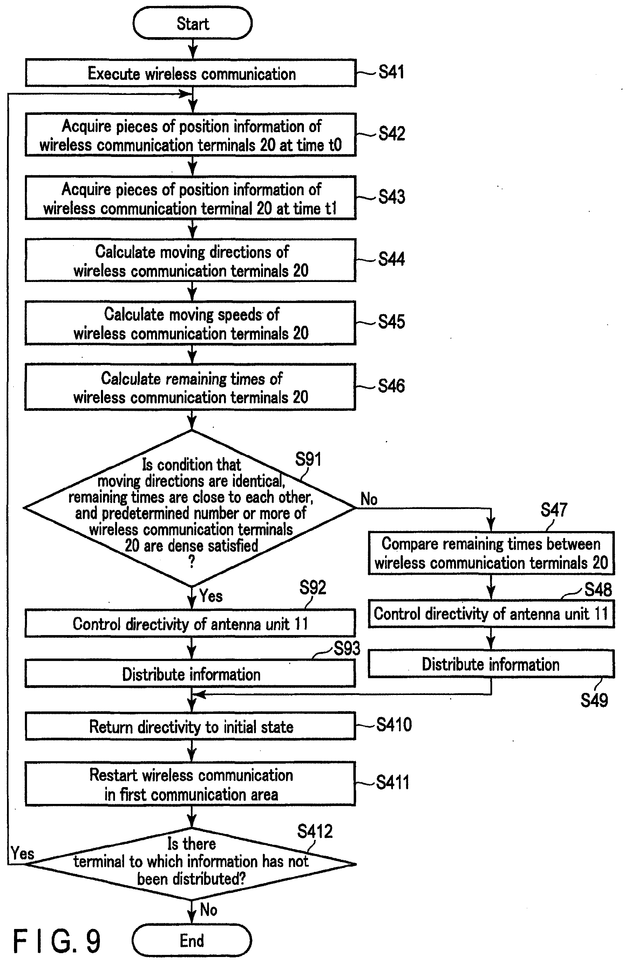

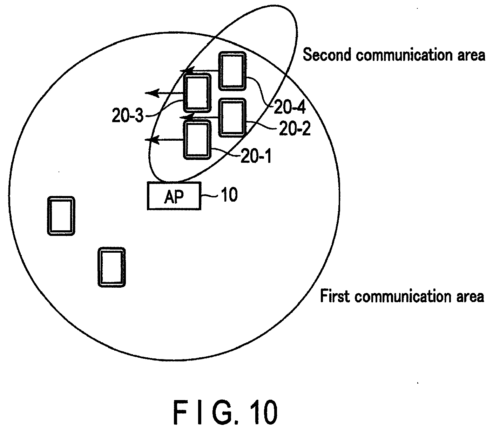

FIG. 9 is a flowchart when an AP 10 sets directivity to a wireless communication terminal 20-2 according to the fourth embodiment. FIG. 10 is a schematic view for explaining FIG. 9.

In an initial state, the AP 10 forms the first communication area shown in FIG. 10.

After steps S41 to S46 of FIG. 9, an antenna control unit 14 of the AP 10 determines whether the moving directions of a preset number or more of wireless communication terminals 20 are identical, the remaining times of the wireless communication terminals 20 fall within a preset range, and the wireless communication terminals 20 are dense (step S91). Referring to FIG. 10, if the antenna control unit 14 determines that a group of wireless communication terminals 20-1 to 20-4 satisfies the above condition (YES in step S91), it sets, as the second direction of directivity, a direction in which the group exists, and outputs a direction-of-directivity control signal to an antenna unit 11 so as to transmit a wireless signal in the second direction of directivity (step S92). A wireless communication unit 12 distributes information to the group existing in the second communication area formed by setting the second direction of directivity (step S93).

If no group satisfying the above condition exists in the first communication area (NO in step S91), the antenna control unit 14 compares the remaining times between the wireless communication terminals 20, and selects the wireless communication terminal 20 whose remaining time is shortest (step S47). The antenna control unit 14 sets, as the second direction of directivity, a direction in which the wireless communication terminal 20 whose remaining time is shortest exists, and outputs a direction-of-directivity control signal to the antenna unit 11 so as to transmit the wireless signal in the second direction of directivity (step S48). The wireless communication unit 12 distributes the information to the wireless communication terminals 20 existing in the second communication area formed by setting the second direction of directivity (step S49).

Subsequently, the AP 10 performs steps S410 to S412 to distribute the information to the wireless communication terminals 20 existing in the first communication area.

As described above, in the fourth embodiment, if the moving directions of the preset number or more of wireless communication terminals 20 are identical, the remaining times of the wireless communication terminals 20 fall within the preset range, and the wireless communication terminals 20 are dense, the antenna control unit 14 sets the directivity of the antenna unit 11 to the group of wireless communication terminals 20. This decreases the frequency of directivity control of the antenna unit 11, thereby making it possible to reduce the time taken to control the antenna unit. Thus, the AP 10 can distribute the information to the wireless communication terminals 20 more efficiently.

Therefore, according to the fourth embodiment, even if the plurality of wireless communication terminals 20 exist in the first communication area, it is possible to suppress the data transfer time from becoming long.

### (Fifth Embodiment)

In the first embodiment, a case in which the antenna control unit 14 sets the directivity of the antenna unit 11 to the wireless communication terminal 20 whose remaining time is shorter has been explained. In addition to this function, the antenna control unit 14 may set the directivity of the antenna unit 11 in consideration of pieces of connection priority information of the wireless communication terminals 20. The connection priority information is set for each wireless communication terminal 20, and determined based on, for example, the service contract conditions of the terminal, the number of times the terminal passes through the communication area of the AP 10, and the like.

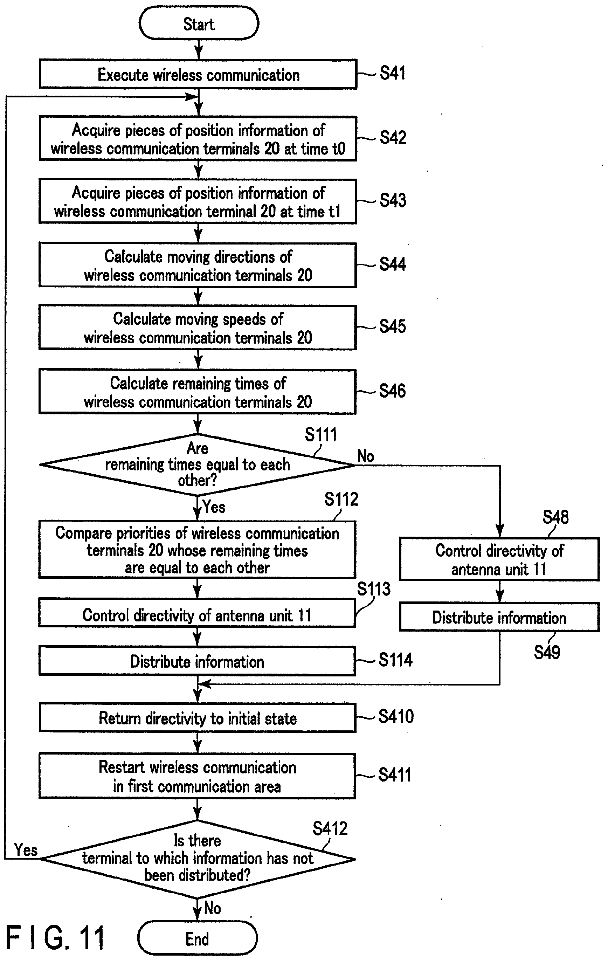

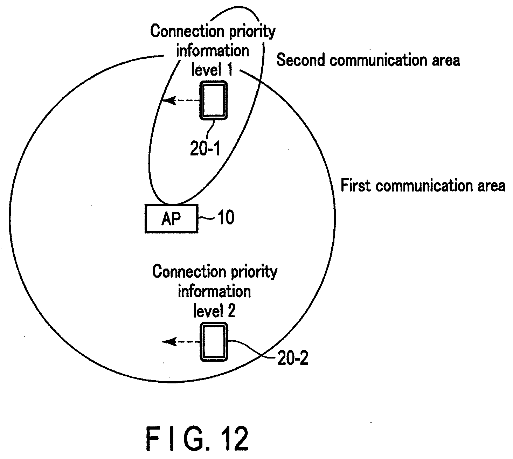

FIG. 11 is a flowchart when an AP 10 sets directivity to a wireless communication terminal 20-1 according to the fifth embodiment. FIG. 12 is a schematic view for explaining FIG. 11.

In an initial state, the AP 10 forms the first communication area shown in FIG. 12.

After steps S41 to S46 of FIG. 11, an antenna control unit 14 of the AP 10 compares remaining times L1 and L2 with each other, and determines whether the remaining times L1 and L2 are equal to each other (step S111). If it is determined that the remaining times L1 and L2 are equal to each other (YES in step S111), the antenna control unit 14 confirms the connection priority information of the wireless communication terminal 20-1 and that of a wireless communication terminal 20-2, and determines which of the wireless communication terminals has a higher priority (step S112). Referring to FIG. 12, if the antenna control unit 14 determines that the priority of the wireless communication terminal 20-1 is higher than that of the wireless communication terminal 20-2, it sets, as the second direction of directivity, a direction in which the wireless communication terminal 20-1 exists, and outputs a direction-of-directivity control signal to an antenna unit 11 so as to transmit a wireless signal in the second direction of directivity (step S113). A wireless communication unit 12 distributes information to the wireless communication terminal 20-1 existing in the second communication area formed by setting the second direction of directivity (step S114).

If it is determined that the remaining times L1 and L2 are not equal to each other (NO in step S111), the antenna control unit 14 sets, as the second direction of directivity, a direction in which the wireless communication terminal 20 whose remaining time is shorter, and outputs a direction-of-directivity control signal to the antenna unit 11 so as to transmit the wireless signal in the second direction of directivity (step S48). The wireless communication unit 12 distributes the information to the wireless communication terminal 20 existing in the second communication area formed by setting the second direction of directivity (step S49).

Subsequently, the AP 10 performs steps S410 to S412 to distribute the information to the wireless communication terminal 20 existing in the first communication area.

As described above, in the fifth embodiment, the antenna control unit 14 sets the directivity of the antenna unit 11 to the wireless communication terminal 20 having a higher priority among the wireless communication terminals 20 whose remaining times are equal to each other. This allows the AP 10 to distribute the information to the wireless communication terminals 20 more efficiently.

Therefore, according to the fifth embodiment, even if the plurality of wireless communication terminals 20 exist in the first communication area, it is possible to suppress the data transfer time from becoming long.

Note that a case in which priorities are compared after the remaining times are compared has been exemplified in the fifth embodiment. However, the present invention is not limited to this. For example, the AP 10 may compare the priorities with each other first, and then compare the remaining times between the wireless communication terminals 20 having the equal priorities.

### (Sixth Embodiment)

In the first embodiment, a case in which the AP 10 controls the directivity of the antenna unit 11 based on the pieces of position information of the wireless communication terminals 20 existing in the first communication area formed by the self apparatus has been explained. The AP may be connected to another AP via a network to refer to pieces of position information of wireless communication terminals existing in a communication area formed by the other AP.

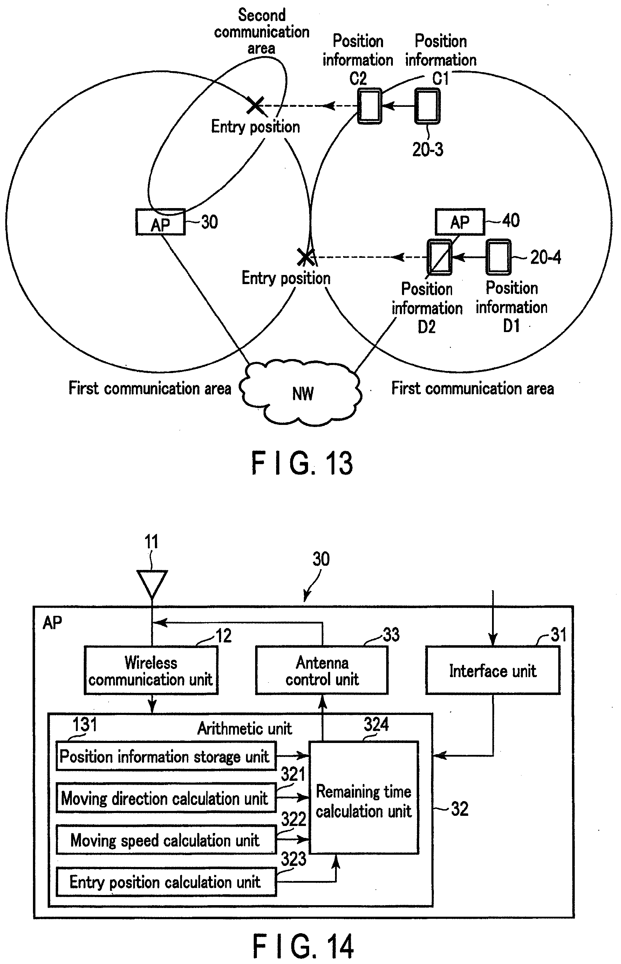

A practical example will be described below. FIG. 13 is a schematic view showing the configuration of a wireless LAN system including an AP 30 according to the sixth embodiment. Referring to FIG. 13, the AP 30 and an AP 40 are connected to each other via a network NW.

The AP 40 acquires pieces of position information of wireless communication terminals 20-3 and 20-4 positioned within a communication area formed by the self apparatus. The AP 40 outputs the acquired pieces of position information to the AP 30 via the network NW in the background.

FIG. 14 is a block diagram showing the functional arrangement of the AP 30 according to the sixth embodiment. The AP 30 shown in FIG. 14 includes an antenna unit 11, a wireless communication unit 12, an interface unit 31, an arithmetic unit 32, and an antenna control unit 33.

The interface unit 31 receives the pieces of position information of the wireless communication terminals 20-3 and 20-4 transmitted from the AP 40.

The arithmetic unit 32 includes a position information storage unit 131, a moving direction calculation unit 321, a moving speed calculation unit 322, an entry position calculation unit 323, and a remaining time calculation unit 324.

The moving direction calculation unit 321 receives the pieces of position information of the wireless communication terminals 20-3 and 20-4 from the AP 40 via the interface unit 31. The moving direction calculation unit 321 calculates the moving directions of the wireless communication terminals 20-3 and 20-4 based on temporal changes of the received pieces of position information. The moving direction calculation unit 321 outputs the calculated moving directions to the entry position calculation unit 323 and the remaining time calculation unit 324.

The moving speed calculation unit 322 receives the pieces of position information of the wireless communication terminals 20-3 and 20-4 from the AP 40 via the interface unit 31. The moving speed calculation unit 322 calculates the moving speeds of the wireless communication terminals 20-3 and 20-4 based on the temporal changes of the received pieces of position information. The moving speed calculation unit 322 outputs the calculated moving speeds to the entry position calculation unit 323 and the remaining time calculation unit 324.

Based on position information of the self apparatus stored in the position information storage unit 131, the pieces of position information of the wireless communication terminals 20-3 and 20-4, the range of the first communication area, the moving directions, and the moving speeds, the entry position calculation unit 323 calculates entry positions at which the wireless communication terminals 20-3 and 20-4 enter the first communication area. The entry position calculation unit 323 outputs the calculated entry positions to the remaining time calculation unit 324.

Based on the position information of the self apparatus stored in the position information storage unit 131, the range of the first communication area, the entry positions, the moving directions, and the moving speeds, the remaining time calculation unit 324 calculates, as remaining times, the times taken for the wireless communication terminals 20-3 and 20-4 entering the first communication area to pass through the first communication area. The remaining time calculation unit 324 outputs the calculated remaining times to the antenna control unit 33.

The antenna control unit 33 compares, between the wireless communication terminals 20 entering the first communication area, the remaining times supplied from the remaining time calculation unit 324. The antenna control unit 33 outputs a direction-of-directivity control signal to the antenna unit 11 so as to converge a beam in a direction in which the wireless communication terminal 20 whose remaining time is shortest exists. This causes the antenna control unit 33 to set, as the second direction of directivity, the direction in which the wireless communication terminal 20 whose remaining time is shortest exists.

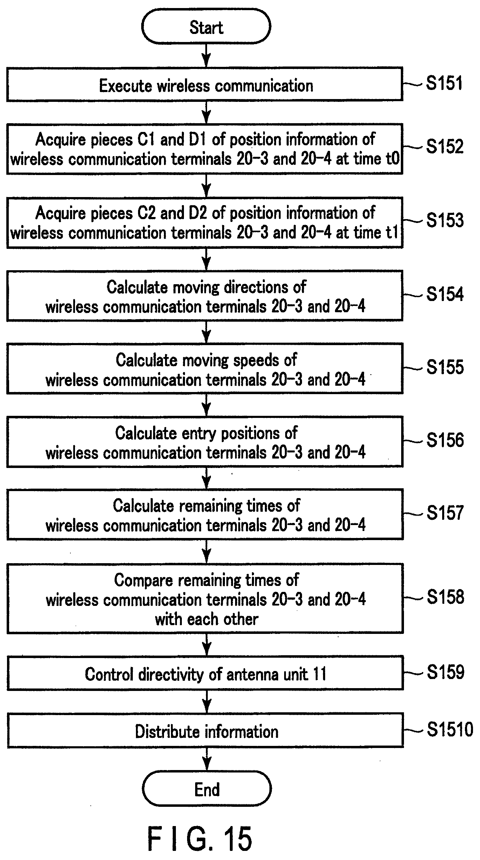

A connection control operation by the AP 30 having the above arrangement will be described in accordance with the processing procedure of the AP 30. FIG. 15 is a flowchart when the AP 30 shown in FIG. 14 sets directivity to the wireless communication terminal 20-3.

In an initial state, the AP 30 forms the first communication area shown in FIG. 13.

The interface unit 31 of the AP 30 receives position information C1 of the wireless communication terminal 20-3 and position information D1 of the wireless communication terminal 20-4 at time t0, which are transmitted from the AP 40 (step S151). Furthermore, the interface unit 31 receives position information C2 of the wireless communication terminal 20-3 and position information D2 of the wireless communication terminal 20-4 at time t1, which are transmitted from the AP 40 (step S152).

The moving direction calculation unit 321 of the AP 30 calculates the moving direction of the wireless communication terminal 20-3 by assuming that the wireless communication terminal 20-3 moves in a direction in which a line connecting the position information C1 and the position information C2 extends. Similarly, the moving direction calculation unit 321 calculates the moving direction of the wireless communication terminal 20-4 by assuming that the wireless communication terminal 20-4 moves in a direction in which a line connecting the position information D1 and the position information D2 extends (step S153).

The moving speed calculation unit 322 of the AP 30 obtains the moving distance of the wireless communication terminal 20-3 from the position information C1 and the position information C2, and calculates the moving speed of the wireless communication terminal 20-3 by dividing the obtained moving distance by the difference between times t1 and t0. Similarly, the moving speed calculation unit 322 obtains the moving distance of the wireless communication terminal 20-4 from the position information D1 and the position information D2, and calculates the moving speed of the wireless communication terminal 20-4 by dividing the obtained moving distance by the difference between times t1 and t0 (step S154).

Based on the position information of the self apparatus, the pieces of position information of the wireless communication terminals 20-3 and 20-4, the range of the first communication area, the moving directions, and the moving speeds, the entry position calculation unit 323 of the AP 30 calculates the entry positions at which the wireless communication terminals 20-3 and 20-4 enter the first communication area (step S155).

Based on the position information of the self apparatus, the range of the first communication area, the entry positions of the wireless communication terminals 20-3 and 20-4, the moving directions of the wireless communication terminals 20-3 and 20-4, and the moving speeds of the wireless communication terminals 20-3 and 20-4, the remaining time calculation unit 324 of the AP 10 calculates, as remaining times L3 and L4, the times taken for the wireless communication terminals 20-3 and 20-4 to pass through the first communication area (step S156).

The antenna control unit 33 of the AP 30 compares the remaining times L3 and L4 with each other, and determines which of the remaining times is shorter (step S157). Referring to FIG. 13, the antenna control unit 33 determines that the remaining time L3 is shorter than the remaining time L4. When the wireless communication terminal 20-3 enters the first communication area, the antenna control unit 33 sets the direction of the entry position as the second direction of directivity. The antenna control unit 33 outputs a direction-of-directivity control signal to the antenna unit 11 so as to transmit the wireless signal in the second direction of directivity (step S158).

The wireless communication unit 12 distributes information to the wireless communication terminal 20-3 by wirelessly communicating with the wireless communication terminal 20-3 existing in the second communication area (step S159).

As described above, in the sixth embodiment, the arithmetic unit 32 of the AP 30 receives the pieces of position information of the wireless communication terminals 20-3 and 20-4 from the AP 40, and calculates the entry positions at which the wireless communication terminals 20-3 and 20-4 enter the first communication area. Furthermore, the arithmetic unit 32 calculates the remaining times taken for the wireless communication terminals 20-3 and 20-4 to pass through the first communication area. The antenna control unit 33 compares, between the wireless communication terminals 20, the remaining times after entering the first communication area, and outputs a direction-of-directivity control signal to the antenna unit 11 so as to set the directivity to the entry position of the wireless communication terminal 20 whose remaining time is shorter. With this processing, when the wireless communication terminal 20 whose remaining time is shorter enters the first communication area, the AP 30 can start distribution of the information to the wireless communication terminal.

Therefore, according to the sixth embodiment, even if the plurality of wireless communication terminals 20 exist in the first communication area, it is possible to suppress the data transfer time from becoming long.

### (Seventh Embodiment)

In the first embodiment, a case in which when the AP 10 transmits a nondirectional wireless signal, the concentric first communication area is formed has been exemplified. However, the present invention is not limited to this. An AP 10 may control the directivity of an antenna unit 11 when forming the first communication area.

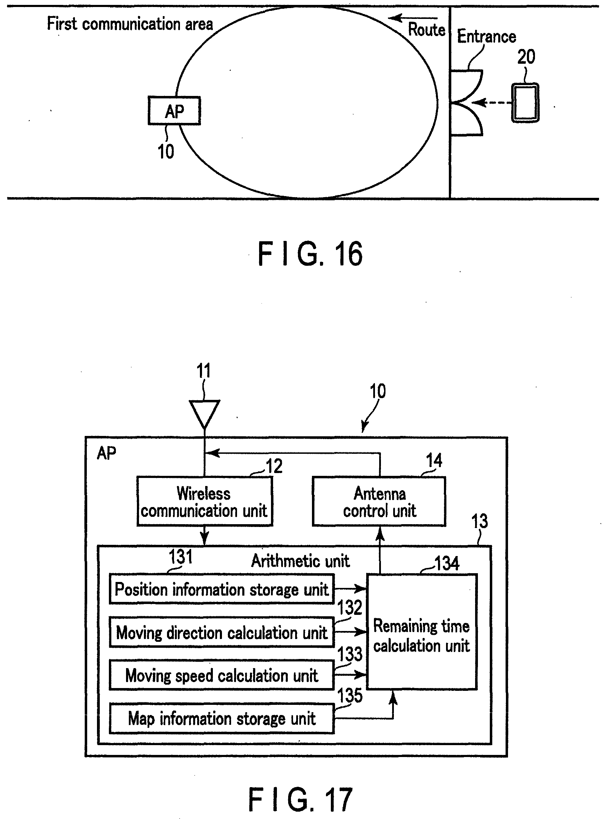

If the AP 10 is installed in a path or the like, it is easy to predict a direction in which a wireless communication terminal 20 enters. For example, in an amusement facility or the like, the traveling direction of a gate may be limited to the incoming direction of the facility. In this case, as shown in FIG. 16, an antenna control unit 14 sets, in advance, the directivity of the antenna unit 11 to the gate direction, in which the wireless communication terminal 20 comes, so as to accept the wireless communication terminal 20. This allows the AP 10 to start distribution of information to the wireless communication terminal 20 at an earlier stage.

If a direction in which the probability that the wireless communication terminal 20 enters is high changes depending on a time period in an event venue, a lecture hall, or the like, the antenna control unit 14 may output a direction-of-directivity control signal to the antenna unit 11 so as to switch the first direction of directivity for every time period. This allows the AP 10 to start distribution of the information to the wireless communication terminal 20 at an earlier stage.

### (Eighth Embodiment)

In the first embodiment, a case in which based on the position information of the self apparatus, the position information of the wireless communication terminal 20, the range of the first communication area, the moving direction, and the moving speed, the remaining time calculation unit 134 calculates, as a remaining time, the time taken for the wireless communication terminal 20 existing in the first communication area to pass through the first communication area has been exemplified. However, the present invention is not limited to this. A remaining time calculation unit 134 may calculate a remaining time by additionally considering a path of a location where an AP 10 is installed.

FIG. 17 is a block diagram showing the functional arrangement of the AP 10 according to the eighth embodiment. An arithmetic unit 13 shown in FIG. 17 further includes a map information storage unit 135 recording map information around the location where the AP 10 is installed. Based on the position information of the self apparatus, position information of a wireless communication terminal 20, the range of the first communication area, the moving direction, the moving speed, and the map information, the remaining time calculation unit 134 calculates, as a remaining time, the time taken for the wireless communication terminal 20 existing in the first communication area to pass through the first communication area.

This causes the remaining time calculation unit 134 to calculate the remaining time in consideration of the moving path of the wireless communication terminal 20, thereby making it possible to more correctly calculate the remaining time.

Therefore, according to the eighth embodiment, even if a plurality of wireless communication terminals 20 exist in the first communication area, it is possible to suppress the data transfer time from becoming long.

Each component described in each of the above embodiments may be implemented by executing a predetermined program on a computer. This program may be recorded in a recording medium of any form such as a RAM, flash memory, ROM, EPROM, EEPROM, register, hard disk, removable disk, or CD-ROM.

Although some embodiments of the present invention have been explained, these embodiments are presented as examples, and do not intend to limit the scope of the invention. The embodiments can be practiced in various other aspects, and various omissions, replacements, and changes can be made without departing from the spirit of the invention. The embodiments and their modifications are included in the scope and spirit of the invention, and are also included in inventions described in the scope of the claims and their equivalent scope.

## Claims

1. A wireless communication apparatus comprising:
an antenna unit (11) configured to receive wireless signals from a plurality of wireless communication terminals existing in a communication area, and change a direction of directivity;
a wireless communication unit (12) configured to acquire pieces of position information contained in the wireless signals;
an arithmetic unit (13) configured to calculate moving directions and moving speeds of the wireless communication terminals based on the pieces of position information, respectively, and calculate remaining times taken to pass through the communication area based on the pieces of position information, the moving directions, and the moving speeds; and
an antenna control unit (14) configured to change the direction of directivity of the antenna unit (11) from a set first direction of directivity to a second direction of directivity in which the wireless communication terminal whose remaining time is shorter than those of the remaining wireless communication terminals exists.

2. The wireless communication apparatus of claim 1, wherein if remaining times of the wireless communication terminals are equal to each other, the antenna control unit (14) sets a direction in which the wireless communication terminal whose moving speed is higher exists as the second direction of directivity.

3. The wireless communication apparatus of claim 1, wherein
the wireless communication unit (12) distributes information to the wireless communication terminal existing in the second direction of directivity, and
if the remaining time is shorter than an information distribution time, the antenna control unit (14) excludes the wireless communication terminal for which the remaining time is calculated from targets to which the second direction of directivity is set, the information distribution time indicating the time taken to distribute the information.

4. The wireless communication apparatus of claim 1, wherein if a group of not less than a preset number of wireless communication terminals whose remaining times are shorter than those of another group and whose moving directions are close to each other exists in a predetermined range, the antenna control unit (14) sets a direction in which the group of wireless communication terminals is positioned as the second direction of directivity.

5. The wireless communication apparatus of claim 1, wherein
priority levels are set in the wireless communication terminals, and
the antenna control unit (14) determines the second direction of directivity by additionally referring to the priority levels.

6. The wireless communication apparatus of claim 1, wherein
the arithmetic unit (13) acquires position information of a wireless communication terminal existing in a communication area formed by another wireless communication apparatus, and calculates an entry position at which the wireless communication terminal enters the communication area of the self apparatus and a remaining time taken to pass through the communication area of the self apparatus based on the acquired position information, and
the antenna control unit (14) sets the second direction of directivity to the entry position in response to an entrance of the wireless communication terminal whose remaining time is shorter to the communication area of the self apparatus.

7. The wireless communication apparatus of claim 1, wherein if the moving direction of the wireless communication terminal is determined in advance, the antenna control unit (14) sets the first direction of directivity to a direction in which the wireless communication terminal is accepted.

8. The wireless communication apparatus of claim 7, wherein if the moving direction determined in advance changes for every time period, the antenna control unit (14) changes the first direction of directivity in accordance with the moving direction for every time period.

9. The wireless communication apparatus of claim 1, wherein the arithmetic unit (13) calculates the remaining time based on the position information, the moving direction, the moving speed, and map information about a location where the self apparatus is installed.

10. A connection control method comprising:
receiving wireless signals transmitted from a plurality of wireless communication terminals existing in a preset first direction of directivity;
acquiring pieces of position information contained in the wireless signals;
calculating moving directions and moving speeds of the wireless communication terminals based on the pieces of position information, respectively;
calculating remaining times taken to pass through a communication area formed in the first direction of directivity based on the pieces of position information, the moving directions, and the moving speeds; and
controlling directivity of an antenna unit (11) to set a direction in which the wireless communication terminal whose remaining time is shorter than those of the remaining wireless communication terminals exists as a second direction of directivity.

11. A non-transitory recording medium recording a connection control program for causing a computer of a wireless communication apparatus to execute:
processing of calculating moving directions and moving speeds of wireless communication terminals existing in a preset first direction of directivity based on pieces of position information acquired with respect to the wireless communication terminals;
processing of calculating remaining times taken to pass through a communication area formed in the first direction of directivity based on the pieces of position information, the moving directions, and the moving speeds; and
processing of controlling directivity of an antenna unit so as to set a direction in which the wireless communication terminal whose remaining time is shorter than those of the remaining wireless communication terminal exists as a second direction of directivity.
